# EUROPEAN PATENT SPECIFICATION

(11) **EP 4 196 047 B1**
(45) Date of publication and mention of the grant of the patent: **14.02.2024**
(21) Application number: 21762431.1
(22) Date of filing: 12.08.2021
(51) Int. Cl.: A61C 17/22, A61C 17/36, A61C 17/02, G16H 20/30

(54) **CONTROLLER FOR GENERATING A CONTROL SIGNAL FOR AN ORAL CARE SYSTEM**
STEUERGERÄT ZUR ERZEUGUNG EINES STEUERSIGNALS FÜR EIN MUNDPFLEGESYSTEM
ORGANE DE COMMANDE POUR GÉNÉRER UN SIGNAL DE COMMANDE POUR UN SYSTÈME DE SOINS BUCCAUX

(30) Priority: 17.08.2020 EP 20191344
(43) Date of publication of application: 21.06.2023
(73) Proprietor: Koninklijke Philips N.V., 5656 AG Eindhoven (NL)
(72) Inventor: GERHARDT, Lutz Christian, 5656 AE Eindhoven (NL); GOTTENBOS, Bart, 5656 AE Eindhoven (NL); JOHNSON, Mark Thomas, 5656 AE Eindhoven (NL); HORSTMAN, Pieter, 5656 AE Eindhoven (NL)
(74) Representative: Philips Intellectual Property & Standards
(86) International application number: PCT/EP2021/072442
(87) International publication number: WO 2022/038025

(56) References cited:
- WO-A1-2019/137841
- WO-A1-2019/166386
- US-A1- 2015 044 629

## Description

### FIELD OF THE INVENTION

The present invention is directed to a controller for generating a control signal for an oral care system, an element of/for an oral care system, an oral care system, a method for generating a control signal and a computer program.

### BACKGROUND OF THE INVENTION

WO 2019/137841 A1 discloses an oral care device comprising a head portion having a protuberance for engaging an interproximal region within an oral cavity. The oral care device also comprises at least one sensor for acquiring motion data for the oral care device, and a processor. The processor is configured to determine when the protuberance of the head portion engages an interproximal region in the oral cavity; and determine, based on motion data acquired by the at least one sensor as the protuberance moves between interproximal regions, a position of the head portion of the oral care device in the oral cavity.

Within the field of oral care, numerous devices and components exist allowing consumer to perform different oral care routines, e.g. brushing or flossing procedures.

However, when it comes to oral care systems with combined brushing and flossing modality/functionality, which are capable of performing simultaneous brushing and flossing procedures, a plurality of problems exists since flossing teeth can complex and inconvenient while brushing in a semicontinuous motion along the tooth arch. In particular, when a fluid flossing outside of interdental space occurs, the fluid flossing has limited effectiveness, since the fluid flossing then is not directed to the targeted area but it is more likely to floss occlusal sides and the like. This can lead to excessive spillage of flossing fluid and undesired dispense of liquid in the mouth.

The inventors of the present invention have thus identified the need to overcome such shortcomings of the currently existing oral care systems.

### SUMMARY OF THE INVENTION

With embodiments of the present invention, a controller for generating a control signal for an oral care system is provided.

The present invention is defined by the independent claims. Further embodiments and advantages of the present invention are incorporated in the dependent claims and the description.

Technical terms are used hereinafter in their common sense. If a specific meaning is conveyed to certain terms, a definition of terms will be given in the following in which the terms are used.

According to a first aspect of the invention a controller for generating a control signal for an oral care system is configured for receiving orientation data generated by the oral care system. The orientation data describes at least one angle between the oral care system and a target surface in an oral cavity, or an angle relative to a reference vector, for instance the gravity vector. Moreover, the controller is configured for comparing the received orientation data with at least one pre-defined orientation condition. In its first aspect, the controller is configured for generating a first control signal for the oral care system if the received orientation data fulfills or meets the pre-defined orientation condition.

The control signal may be configured for triggering or adapting an oral care procedure performed by the oral care system, or adapting a setting of the oral care system.

The orientation data describes at least one resultant angle of (an element of) the oral care system either relative to the gravity vector or between the oral care system and a target (tissue) surface in an oral cavity, based on measurement of at least one rotation angle around at least one axis of the oral care device. In its simplest version, the angle relative to the gravity vector 'in air' can be used as an information to control the system.

It must be noted that the "target surface" can be a tissue target surface, but of course it can be used and is covering the targeting of a metal implant or an interdental space of a crown, i.e. non-biological material. Thus, the term "target surface" shall be understood to comprise a surface that can be a biological and non-biological material.

It should be noted that the feature "at least one rotation angle around at least one axis of the oral care device relative to a surface of the oral cavity" can be understood as the angle between a line r along one device axis, and the target surface (a plane), π, is the angle between r and its orthogonal projection onto π,r', as is for example described under https://www.superprof.co.uk/resources/academic/maths/analytical-geometry/distance/angle-between-line-and-plane.html.

In the context of the present invention, the term "controller" shall be understood broadly covering any unit that is configured for carrying out the described functions. Thus, any processor unit and/or calculation unit configured for carrying out such steps, as described hereinbefore and in the following embodiments of the present invention, shall be understood as such a controller.

The controller is configured for receiving, processing and sending signals associated with the oral care system and/or elements thereof. The controller can be located in any element of the oral care system. In particular, the controller can be located in and/or coupled to a handle and/or a brush head and/or an attachable module of the oral care system. In particular, the controller can be located in and/or coupled to any re-attachable click on unit/module for cleaning, treatment or even sensing Moreover, the controller can be located in an accessory, e.g. a smartphone or a tablet or another kind of handheld device, which can be a part of the oral care system and which can be interconnected with other elements of the oral care system. This will be explained in more detail in the context of particular embodiments of the present invention.

It will be referred to hereinafter to the "first control signal" also as the "control signal", and other control signals will be termed differently.

As mentioned before, the controller is configured for receiving, acquiring and/or reading out orientation data, which is generated by the oral care system. In other words, the oral care system is configured for generating orientation data and transferring, sending, and/or uploading said generated orientation data to the controller. The orientation data can be generated by the oral care system using active and passive sensing devices, like e.g. an accelerometer, an inertia measurement unit, a gyroscope or (mechanically) responsive materials. However, the generation of orientation data is not limited to the above listed sensor examples.

For example, the controller can be located in the handle of the oral care system. In said example, a brush head, which comprises a sensor, can be attached to the handle of the oral care system. The controller can receive the orientation data generated by the sensor in the brush head or handle and can adapt the oral care procedure based on the received orientation data.

Moreover, the orientation data describes at least one angle between the oral care system or one element of the oral care system and the target surface in the oral cavity, or an angle relative to a reference vector, for instance the gravity vector. The at least one angle shall be understood in the context of the present invention as the orientation of the oral care system to the target tissue surface measured, for example, in degrees. In particular, the angle can be defined between the element of the oral care system and the target surface in the oral cavity. Furthermore, the orientation data can describe the change of the angle over time between the oral care system and the target surface. Furthermore, in its simplest configuration, the present invention can measure the angle relative to gravity. A sensor may be used by the oral care system of the present invention in order to measure this actual angle relative to the gravity vector.

As described before, the controller is configured for comparing and/or correlating the received orientation data with at least one pre-defined orientation condition. The comparison between the orientation data and the pre-defined orientation condition can be performed by the controller continuously, at a given rate and/or at pre-defined time points.

The pre-defined orientation condition can be understood in the context of the present invention as e.g. a specific value of a single angle, a range of values, a combination of angles relative to different spatial planes of the target surface (e.g. combination of yaw, pitch, roll angle which are measured relative to different coordinate axes/planes), and/or a change of a value over time of the predefined orientation condition. It should be noted that value may also not change over time, e.g. in the case of occlusal brushing if someone brushes the biting surfaces of the tooth arch, the roll angle stays fairly constant for 5-20 seconds. For example, the pre-defined orientation condition can be a single roll angle of 45° between the oral care system and the target tissue in the oral cavity. In a further example, the predefined orientation condition can be a range of angles, e.g. 40° to 50°. In such example, the controller can compare e.g. the angle between the oral care system or an element thereof and the target tissue surface in the oral cavity to the specific value of pre-defined orientation condition and/or the range of the predefined orientation condition. The pre-defined orientation condition may be stored e.g. in a data storage of the oral care system to which the controller has access, but can also be stored e.g. remotely on a server of the oral care system to which the controller gains access. Further examples and details of the predefined orientation condition will become apparent from embodiments described hereinafter in more detail.

Moreover, the controller is configured for generating, outputting and/or sending the control signal for the oral care system if the received orientation data meets, fulfills and/or reaches the pre-defined orientation condition. The control signal should be understood in the context of the present invention as any form of signal, which can be generated and sent/emitted by the controller, for adapting the oral care device or procedure performed by the oral care system. For example, in case the pre-defined orientation condition is met, the controller sends out the control signal, which is configured for activating or deactivating fluid delivery of the oral care system, as will be explained in more detail hereinafter.

As is clear to the skilled reader the adaptation of device settings is also covered through the term "procedure" as used hereinbefore and hereinafter.

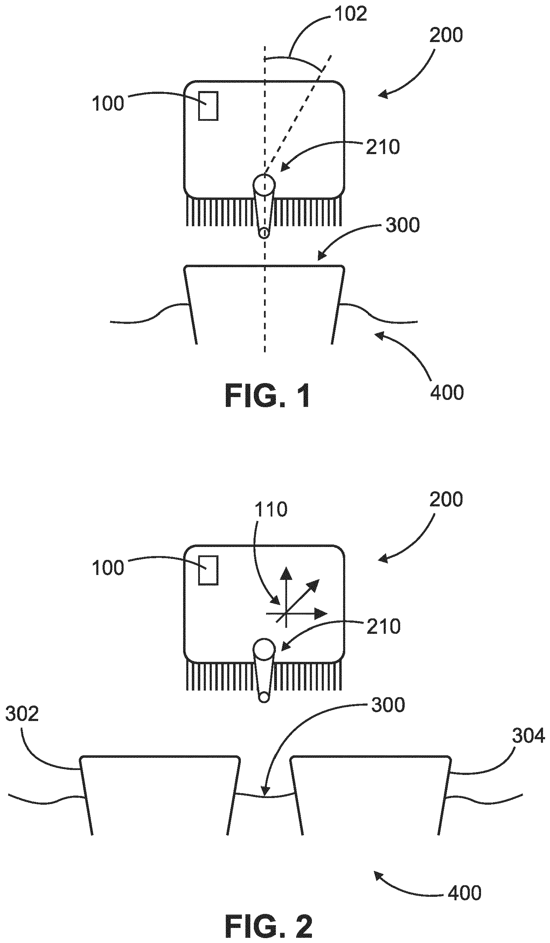

The controller is configured, as was mentioned before, for comparing the orientation data with the pre-defined orientation condition. Said comparison will be described in more detail in the following example. It is assumed for this example that the orientation data describes an yaw angle of 30° between the brush head of the oral care system and the target tissue surface in the oral cavity at a first time point and 45° at a second time point. The controller compares the value of the angle at the first time point with the pre-defined orientation condition, which is in this example a range between 40° and 50°. The result of the comparison at the first time point is that the pre-defined orientation condition is not met since the angle of 30° at the first time point is not in the range between 40° and 50°. Therefore, the oral care procedure is not adapted, e.g. the fluid delivery like flossing is not activated or deactivated by the controller if the condition is not met (but the system can enter a feedback or coaching mode as described later). The comparison between the orientation data and the pre-defined orientation condition is repeated at the second time point. At the second time the pre-defined orientation condition is met and accordingly the controller generates and sends out the control signal for adapting the oral care procedure, e.g. activation of fluid delivery, e.g. flossing or continuous or pulsed fluid jetting. A similar, but more detailed embodiment will be explained in the context of figure 1.

It should be noted that the present invention comprises an oral care system comprising at least one element and a controller to determine an angle between the system and for example a tooth, and/or the corresponding method. In a non-limiting example of this invention, the system is configured to determine the orientation of the oral care system or an element thereof under the assumption that the user is holding his head straight and that teeth are standing vertically.

An advantage of providing a controller according to this first aspect of the present invention can be that an oral care procedure, e.g. a flossing procedure, performed by the oral care system can be improved, since the flossing procedure can be adapted to the actual orientation between the oral care system and the target tissue surface, e.g. an interdental space. This may improve the procedure carried out by the oral care system that receives and uses the control signal of the controller described here. A further advantage can be that fluid pressure induced stress (pressure points) on the gums during the oral care procedure can be reduced, since the oral care procedure can be turned off when the oral care procedure treats a tooth region close to gum or the gum itself. Moreover, the brushing and flossing efficiency may be increased by making the fluid delivery action more efficient and robust to varying brushing angles by determining the orientation of the oral care system relative to the target tissue surface, e.g. an occlusal tooth surface or a gum line. This for example can be achieved by jetting at defined angles and/or adjusting the angulation/deflection of a fluid emitting component (e.g. nozzle) to optimize the jetting direction based on the received orientation data. Furthermore, based on the orientation of the oral care system an oral care procedure can be switched from one mode to another. For example, the mode of oral care procedure can be changed from interdental cleaning to pocket cleaning based on the actual orientation of the oral care system relative to the target surface.

According to an embodiment the at least one angle of the orientation data is a roll angle, a pitch angle, a yaw angle and/or a combination of at least two of said angles between at least one element/component of the oral care system and the target tissue in the oral cavity. The at least one element can be for example a brush head with integrated nozzle or a nozzle alone.

The advantage of this embodiment can be that the oral care procedure or device configuration can be adapted specifically to the ideal or optimum orientation of the oral care system and the target tissue surface based on the measured roll angle, pitch angle or yaw angle (or combinations thereof) between e.g. a brush head, a flossing head and/or a mouthpiece, as exemplary elements of the oral care systems of the present invention.

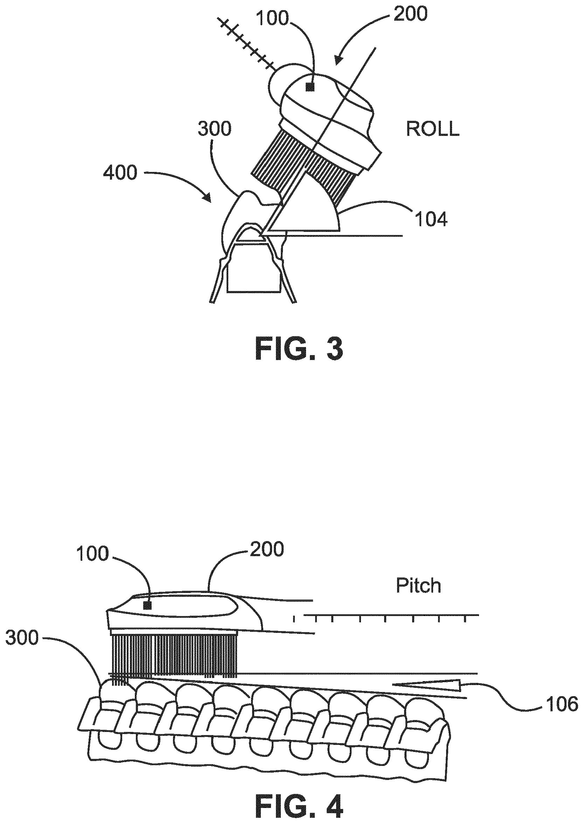

The at least one angle can be any angle, which is configured for specifying the orientation between the target tissue surface. The roll angle, the pitch angle and the yaw angle will be described in detail in view of figures 3 to 5 and their corresponding figure description.

According to another embodiment, the control signal is configured for triggering an activation or a deactivation of a fluid delivery, e.g. a flossing operation, of the oral care system.

As mentioned above, the control signal is configured for triggering, starting and/or initiating an activation or a deactivation of a fluid delivery, e.g. a flossing operation with pre-defined or adapted parameter settings (fluid pressure, flow rate, flow profile, duty cycle, pulse rate etc.), of the oral care system. In other words, the control signal is configured for adapting the oral care procedure performed by the oral care system through activating or deactivating the fluid delivery. For example, the controller generates the control signal because the pre-defined orientation condition is met, and therefore activates or deactivates the fluid delivery of the oral care system for the time the pre-defined orientation condition is met.

The advantage of this embodiment can be that the oral care procedure can be adapted such that the oral care procedure is more accurate and/or is more pleasant for the user of the oral care system, since the fluid delivery can be activated or deactivated based on the control signal generated by the controller and executed in the oral care system.

According to another embodiment, the control signal is configured for triggering an adaption of at least one operation parameter of at least one actuator of the oral care system. The actuator is selected from the group consisting of: a fluid actuator (e.g. pump), a mechanical actuator, an electric actuator, a (electro-) magnetic actuator, an ultrasonic actuator and any other suitable actuator technology.

The advantage of this embodiment can be that based on the control signal an operation parameter of an actuator can be adapted in order to improve the oral care procedure performed by the oral care system. The adaption of the operation parameter can be thereby specifically adjusted to the current orientation of the oral care system thereby even further improving the oral care procedure performed by the oral care system.

As stated above the control signal is configured for triggering, starting and/or initiating an adaption, change and/or adjustment of at least one operation/operational parameter of at least one actuator of the oral care system. The operational parameter of the actuator can be understood as describing the functionality and/or desired performance of the actuator. In an exemplary example, the operational parameter can be the revolutions per minute of an electric motor or any other suitable energy transmission technology, which is in this example the actuator of the oral care system.

As is clear to the skilled reader, the actuator of the oral care system can be any element configured for adapting the oral care procedure performed by the oral care system of the present invention. In particular, the actuator can be a mechanical actuator, e.g. an electric motor of the oral care system, a fluid actuator, e.g. a fluid pump, and/or a valve, e.g. a fluid valve in e.g. a flossing head, a handle or a in a base station of the oral care system, for controlling the flossing procedure of the oral care system. However, the actuator is not limited to the above described examples and therefore any actuator used in an oral care system can be suited, without departing from the present invention.

According to another embodiment, the control signal is configured for triggering an adaption of an orientation and/or a geometry change of a fluid emitting element of the oral care system, or a selective activation of a single nozzle from a plurality of fixed nozzles.

According to another embodiment, the control signal is configured for triggering an adaption of an orientation and/or an outlet geometry or orifice of a fluid emitting element (e.g. diameter of a nozzle) of the oral care system.

As is clear from this embodiment, this not only relates necessarily to a circular opening, but covers also a cross-shaped outlet. An advantage of this embodiment can be that based on the current orientation of the oral care system the orientation and diameter of the nozzle can be adapted in order to improve the results of the flossing procedure performed by the oral care system.

In this case, the control signal is configured for triggering, starting and/or initiating an adaption and/or adjustment of the orientation and/or the diameter of the nozzle of the oral care system. In other words, the oral care system comprises a nozzle, e.g. a nozzle for flossing. The oral care system can be configured for adapting the orientation and/or the diameter of said nozzle based on the orientation data of the oral care system. In particular, the oral care system can be configured for adaption the orientation and/or the diameter of said nozzle in case the orientation data meets the pre-defined orientation condition.

In a non-limiting example, the nozzle can be configured for changing its orientation to the oral cavity and/or its diameter. Said nozzle can be configured for targeting an interdental space by changing its orientation data based on the orientation of the oral care system in relation to the target tissue surface. Furthermore, the nozzle can be configured for adapting its flossing procedure by changing the diameter of the nozzle based on the orientation of the oral care system, e.g. can narrow the diameter for targeting the interdental space and can widen the diameter when the nozzle is directed to gum to for example lower the pressure exerted on the tissue.

According to an embodiment, the controller is configured for generating a second control signal in case the orientation condition is not met. Furthermore, the controller is configured for sending the second control signal to the oral care system for outputting instructions to a user of the oral care system in order to meet the orientation condition of the oral care system.

The advantage of this embodiment can be that the oral care procedure can be further improved, since the user can learn from the second control signal how to use the oral care system in a way that the orientation of the oral care system during the oral care procedure is improved. Thus, the user gets a valuable feedback from the oral care system of the presented embodiment.

As described before, the controller is configured for generating, outputting and/or sending a second control signal in case the orientation condition is not met. Moreover, the controller is configured for sending, transferring and/or sharing the second control signal with the oral care system for outputting and/or emitting teaching instructions to a user of the oral care system in order to meet and/or help achieve the desired orientation condition of the oral care system. In other words, the oral care system can be configured for receiving the second control signal from the controller based on the orientation data of the oral care system.

The term "not met" shall be understood in the context of the present invention, that the comparison between the orientation data of the oral care system and the pre-defined orientation condition is not reached and/or (sufficiently) fulfilled.

For example, the pre-defined orientation condition is an angle between the oral care system, e.g. a brush head and the target tissue of 45°. However, the user of the oral care system only holds the oral care system at an angle of 30°. In this case, the controller outputs the second control signal and causes thereby the oral care system to teach the user how to hold the oral care system in order to achieve the angle of 45°. The output of instructions to the user can be achieved via an e.g. accessory device, like a smartphone, and/or an assistant device, e.g. a display or a bathroom mirror, which both can be part of the oral care system and can be interconnected with other elements of the system, like e.g. the controller, the handle and/or e.g. the brush head measuring the orientation data.

According to another embodiment, the controller is configured for receiving additionally location or position data describing a position of an element of the oral care system, optionally in relation to the target tissue surface in the oral cavity. The controller is configured for comparing the received position data with at least one pre-defined position condition. Moreover, the controller is configured for generating the control signal for the oral care system if the received position data meets the pre-defined position condition.

The advantage of this embodiment is that, the position of the oral care system can be linked to the orientation of the oral care system and the oral care procedure can be further improved based on combined position and orientation data of the oral care system.

The controller is configured for receiving, generating and/or downloading position data (e.g. download from a cloud-based database), describing a position of an element of the oral care system in relation to the target tissue surface in the oral cavity. Moreover, the controller is configured for comparing and/or correlating the received position data with at least one pre-defined position condition. Furthermore, the controller is configured for generating, outputting and/or sending the control signal for the oral care system if the received position data meets the pre-defined position condition. For instance, the controller can be configured for receiving the position data from a high-resolution location measurement system.

The position data can be indicative for a relative position between an element, i.e. a component, of the oral care system and the target tissue surface. In addition, the position of the target tissue surface can be determined by the oral care system, as will be explained in further detail hereinafter. The controller can compare by calculation, the position data with the pre-defined position condition.

For example, the position of the target tissue surface is expressed in three dimensional coordinates. The pre-defined position condition can therefore be expressed as a desired position in three dimensional coordinates. The controller is configured to compare the actual position of the element or oral care system with the desired position and generates a control signal when the actual position equals the desired position.

According to an embodiment, the controller is configured for detecting an interdental space, a gum line, a gingival pocket and/or a tooth quadrant based on the received position data. Furthermore, the controller is configured for generating the control signal based on said detection.

The advantage of this embodiment can be that with the detection of important features of the oral care procedure, e.g. the interdental space, the controller can control the oral care procedure in such a way that the efficiency of the oral care procedure can be further improved.

As described before, the controller is configured, by calculation, for identifying and/or assessing an interdental space between at least two teeth, a gum line, a gingival pocket and/or a tooth quadrant based on the received position data.

In other words, the controller is configured for identifying in the received position data the target tissue surface, which can be in this embodiment an interdental space between at least two teeth, a gum line and/or a gingival pocket. Furthermore, the controller can be configured to identify tooth quadrants based on the received position data.

Moreover, the controller can be configured for detecting the target tissue surface, e.g. an interdental space, a gum line, a gingival pocket and/or a tooth quadrant based on the received position data with the help of at least one sensing method or principle selected from the group consisting of: a machine learning approach in combination with a centimeter accurate oral positioning system, a sensor element comprised in the nozzle, an automatic angle adjustment, an interdental locking mechanism comprising a fluid emitting tube with moveable jetting outlet, an dental imprint, a dental image, a motion tracking and a remote tracking device. However, many more than the above listed sensing principles can be used without departing from the present invention for detecting the above listed target tissue surface.

Moreover, the controller can be configured for performing a data analysis on the orientation data and at the position data. The data analysis can be used to make the generated data comparable to the pre-defined orientation condition and pre-defined position condition. Furthermore, the data analysis can be configured for identifying features of the target tissue surface and/or the oral cavity with the help of statistical evaluation, e.g. principal component analysis. Moreover, the statistical data analysis can be a morphologic feature matching based on an extraction of features from dental images.

According to an embodiment, the controller is configured for comparing the received orientation data and the received position data with a pre-defined position-specific orientation condition or an orientation-specific position. Moreover, the controller is configured for generating the control signal if the position data and the orientation data meet the pre-defined position-specific orientation condition or the orientation-specific position.

The advantage of this embodiment can be that with the combination of orientation and position data, the oral care procedure can be further improved since the position and angles are monitored simultaneously by the controller, and both data aspects can be used in combination to trigger the oral procedure when for instance the pre-defined position-specific orientation condition is met, e.g. triggering the flossing at suitable position and angle.

As stated before, the controller is configured for comparing and/or correlating the received orientation data and the received position data with a pre-defined position-specific orientation condition or an orientation-specific position. In other words, the oral care system can be configured for assessing the position and the orientation, e.g. an angle, of the oral care system in relation to a target tissue position. The controller can then, based on the assessed position and orientation of the oral care system in relation to the target tissue surface, generate a control signal depending on whether the predefined position-specific orientation is met and therefore the oral care procedure performed by the oral care system is triggered and/or adapted.

For example, the oral care system is located at an interdental space at the correct angle. Therefore, the comparison of the controller between the current position and the orientation of the oral care system and the pre-defined position-specific orientation condition will lead to the generation of the control signal by the controller. The controller sends the control signal to the oral care system and thereby causes an adaption of the oral care procedure performed by the oral care system.

According to a further aspect of the present invention an element for/of an oral care system is presented, wherein the element comprises the controller as described before and herein after. This element of the oral care system is embodied as a handle, a brush head, a flossing head, and/or as a mouthpiece or part of the latter.

With the help of the controller the element can be controlled depending on the orientation of the element in relation to the target tissue surface. This can enable an oral care procedure, like e.g. interdental space flossing, procedure which requires the current orientation of the element and/or a specific orientation of the element.

The element of the oral care system comprises the controller for generating a control signal for controlling the oral care system. Moreover, the controller can be interconnected with the element and may be also with other components of the oral care system, for controlling an actuator of the oral care system. This actuator may be located in the same element of the oral care system, but may also be located in other element of the oral care system. For example, the controller of the present invention is located in the handle and controls an actuator that is located in the brush head. Furthermore, the element can be embodied as a mouthpiece, which is insertable into the oral cavity and thereby forms an independent oral care device, that does not need any manual handling upon operation. The mouthpiece may comprise the controller and an actuator, which can be controlled by the controller via the control signal.

In an example the element of the oral care system is a handle and comprises an electric motor. The controller is in this example interconnected with the electric motor. The controller can send out a control signal thereby adapting an operation parameter of the electric motor, like e.g. the revolutions of the motor per time unit.

A further aspect of the present invention is an oral care system, which comprises said element/oral care system element as described before and herein after. Moreover, the oral care system comprises a sensor unit for measuring the orientation data.

The advantage of this aspect is that with the help of the element in combination with the sensor unit the oral care procedure of the oral care system can be improved. This is achieved since the sensor unit can assess the orientation of the oral care system and the controller can adapt the oral care procedure based on the orientation of the oral care system in order to improve the oral care procedure as it is explained before and herein after.

The oral care system can further comprise an accessory handheld device, e.g. a smartphone, wherein the controller is located inside the handheld device. Furthermore, the oral care system can be interconnected with a cloud service, wherein the controller is located in the cloud. As stated before, the sensor unit can be configured for measuring, scanning and/or generating the orientation data. In particular, the sensor unit is capable of measuring the orientation and/or the position of the oral care system inside the oral cavity.

As is apparent to the skilled reader and was explained before all details and embodiments described herein for the controller similarly pertain to corresponding embodiments of the oral care system of the present invention. The same holds for the method for generating a control signal, as will be explained now.

A further aspect of the present invention is a method for generating a control signal. The method comprises the steps of:
- receiving orientation data and/or position data generated by the oral care system,
   wherein the orientation data describes at least one angle between the oral care system and a target tissue surface in an oral cavity,
   - comparing the received orientation data and/or position data with at least one pre-defined orientation condition or at least one pre-defined position condition (or combinations thereof whereas the orientation and position data is related to each other), and
   - generating the control signal for the oral care system when the received orientation data fulfills s the pre-defined orientation condition and/or a pre-defined position-specific orientation condition.

The control signal may be configured for triggering or adapting an oral care procedure performed by the oral care system, or adapting a setting of the oral care system.

In a preferred embodiment the step of generating a second control signal when above conditions are not fulfilled is comprised.

Such a method can be performed by a controller of the oral care system as was described before, but can also be carried out by e.g. a computer network structure as will be described later in more detail.

As described before, the method comprises the step of receiving, acquiring and/or reading out orientation data and/or position data generated by an oral care system. Moreover, the method comprises the step of comparing, contrasting and/or correlating the received orientation data and/or position data with at least one pre-defined orientation condition and/or with at least one pre-defined position condition. The method comprises the step of generating, outputting and/or sending the control signal for the oral care system if the received orientation data meets the pre-defined orientation condition and/or a predetermined position-specific orientation condition.

The steps of the method can be performed and/or repeated continuously and/or at predetermined time points. Moreover, the method is capable of receiving orientation data and/or position data which describe and/or are indicative of an orientation and/or position between the oral care system and the target tissue surface.

Moreover, the method can be performed by a controller located inside of an oral care system. Furthermore, the method can be performed by a cloud service and/or a computer network structure. For example, the oral care system can be interconnected with the computer network structure. The oral care system can generate orientation data and upload the generated data to the computer network structure. The computer network structure can be configured for performing the steps of the method and can be configured for generating the control signal. The computer network structure can then transfer the control signal to the oral care system. The oral care system can then adapt its oral care procedure based on the received control signal, which was generated by the computer network structure.

Using a computer network structure and/or a cloud for implementing this method has the advantage that no such controller functionality must be comprised in the elements or components of the oral care system, which the user has at home. The controller functionality is provided by the cloud. This can reduce the production costs for the elements of the oral care systems, which the user has at home. Furthermore, certain future changes like improvements, which the central cloud provides, can be easily centrally in the cloud and distributed to may oral care systems, which use such an embodiment of the present invention.

A practical advantage of this method can be that the amount of flossing fluid can be reduced since the flossing is only triggered when the predefined orientation condition is met. In addition, the flossing can be reduced in unintentional areas e.g. on occlusal tooth surfaces or the gums.

According to an embodiment, the method comprises the step of triggering an activation and/or a deactivation of a fluid delivery, e.g. a flossing operation, of the oral care system.

For example, the method is performed by a controller or by the computer network structure as described above. Thereby the computer network structure can send out the control signal to the oral care system thereby adapting the oral care procedure of the oral care system by activating or deactivating the fluid delivery of the oral care system.

According to an embodiment, the method comprises the steps of:
- detecting an interdental space, an occlusal surface, a gum line, a gingival pocket and/or any other related feature of the oral cavity in an image of the oral cavity, and
- generating the control signal for the oral care system if the received orientation data meets the pre-defined orientation condition and based on said detection of the gum line, gingival pocket and/or any other related feature of the oral cavity.

In a preferred embodiment the method also comprises generating a second control signal if the condition is not met.

As stated above the method can comprise the step of detecting, identifying and/or capturing an interdental space, an occlusal surface, a gum line, a gingival pocket and/or any other related feature of the oral cavity in an image of the oral cavity. Moreover, the method can comprise the steps of generating, outputting and/or sending the control signal for the oral care system if the received orientation data meets the pre-defined orientation condition and based on said detection of the gum line, gingival pocket and/or any other related feature of the oral cavity.

The oral care system can be configured for accessing an image of the oral cavity. Furthermore, the method, which may be performed by a cloud service, can detect several features in said generated image like a gum line, a gingival pocket and/or any other related feature of the oral cavity. Thus, this embodiment is not generating an image of the oral cavity, but it maps the orientation and/or location data onto digitized jaws, i.e. 3D tooth images, and use this mapping information to adapt the flossing characteristics of the oral care system.

In addition, a cloud service may receive the actual orientation data, preferably also position data, generated by the oral care system. Based on the current orientation data and the detected features, the cloud service may generate a first control signal when the pre-defined orientation condition is fulfilled, and may also generate a second control signal when the condition is not fulfilled.

A further aspect of the present invention is a computer program, which when executed instructs a processor unit to perform the steps of the method as described before and hereinafter.

The computer program can be part of an already existing program and/or can be an independent program. In addition, the computer program can be performed on a processor unit, which is located inside of the oral care system and/or can be performed on a computer network structure, e.g. a cloud service.

A further aspect of the present invention is a computer data storage which stores the computer program as described before. The computer data storage can be a local data storage, e.g. a hard disk, or can be a remote storage, e.g. a webserver.

A further aspect of the present invention is a use of a controller as described herein for generating at least one control signal for an oral care system.

All disclosures as described here in relation to any aspect of the invention apply equally to all other aspects of the invention. In the following, the examples and embodiments of the invention are described with reference to the figures.

### BRIEF DESCRIPTION OF THE DRAWINGS

Figure 1 shows an element of the oral care system according to a first exemplary embodiment.
Figure 2 shows an element of oral care system according to a second exemplary embodiment.
Figure 3 shows an example of a roll angle of an element of the oral care system relative to the target tooth surface
Figure 4 shows an example of a pitch angle of an element of the oral care system relative to the target tooth surface.
Figure 5 shows an example of a yaw angle of an element of the oral care system relative to the target tooth surface.
Figure 6 shows an example of a fluid emitting action/event of an element of the oral care system into the interdental space.
Figure 7 shows an oral care system with accessory device according to an exemplary embodiment.
Figure 8 shows an oral care system according to an exemplary embodiment.
Figure 9 shows an oral care system according to an exemplary embodiment.
Figure 10 shows a flow diagram illustrating a method according to an exemplary embodiment.
Figure 11 shows a flow diagram illustrating a method according to an exemplary embodiment.
Figure 12 shows a diagram illustrating the signal pathways of the control signals for adaptation of the oral care system according to an exemplary embodiment.
Figure 13 shows a diagram illustrating the signal pathways of the control signals for user instructed adaptation of the oral care system process according to an exemplary embodiment.
Figure 14 defines the roll, pitch and yaw angle as used herein.

### DETAILED DESCRIPTION OF EMBODIMENTS

Figure 1 shows a front view of an element of an oral care system 200 comprising a controller 100, which is configured for generating a control signal for the oral care system 200. Controller 100 is configured for receiving orientation data generated by the oral care system 200. The orientation data describes at least one angle 102 between the oral care system 200 and a target tissue surface 300 in an oral cavity 400. The controller 100 is configured for comparing the received orientation data with at least one pre-defined orientation condition. Furthermore, the controller 100 is configured for generating the control signal for the oral care system 200 if the received orientation data meets the specific predefined orientation condition. As can be seen in figure 1, the oral care system 200 is located above a target tissue surface 300, which is in figure 1 an occlusal surface of a tooth. The target tissue surface 300 is located in the oral cavity 400. The oral care system 200 is configured for generating orientation data, which are received by the controller 100 and the orientation data describes at least the angle 102. The orientation data will be further explained in figure 3 to 5 and the corresponding figure description. Furthermore, the oral care system 200 comprises a nozzle 210, from which e.g. a cleaning fluid, comprising liquids and/or gases/air, can be emitted towards the teeth. The controller 100 is configured for generating the control signal if the pre-defined orientation condition, e.g. a roll angle 102, is met and in this embodiment the flossing procedure is deactivated, based on the control signal that is generated by controller 100. The controller 100 is configured for generating control signal, which triggers an adaption of one or more operation parameters of at least one actuator of the oral care system 200. The actuator (not shown here in detail) is selected from the group consisting of a fluid actuator, a mechanical actuator, an electric actuator, a magnetic actuator and an ultrasonic actuator.

In this embodiment, the orientation of a single angle, in particular the roll angle, is used as an on-/off criterion for fluid jetting. If the roll angle 102 is about 0 degree (or varies only within a small range such as 0 ± 20 degrees relative to the vertical dashed axis), jetting is disabled. In its simplest form, the invention can be used without any additional position or location measurement technique as roll angles for occlusal surfaces are very unique and distinctive from other tooth surfaces and locations. This is a unique roll angle signature to identify occlusal surfaces and consequently deactivate the flossing function of the device.

The advantage of this embodiment is that an oral care procedure, e.g. the flossing procedure, performed by the oral care system 200 can be improved since the flossing procedure can be adapted to the current orientation between the oral care system 200 and the target tissue surface 300, i.e., the flossing procedure on the occlusal surfaces is interrupted.

Figure 2 shows a side view of another element of an oral care system 200 comprising a controller 100 according to another exemplary embodiment of the present invention. The element of the oral care system 200 is configured for assessing the position 110 of the oral care system 200 in relation to the target tissue surface 300 within the oral cavity 400. The target tissue surface 300 is located between a first tooth 302 and a second tooth 304. In this embodiment, the target tissue surface 300 is the interdental space. The element of the oral care system 200 comprises a nozzle 210. The control signal only triggers the flossing of the nozzle 210 when the pre-defined position condition is fulfilled, e.g. when the nozzle 210 is located in close vicinity, inside or next to the target tissue surface 300, in this embodiment the interdental space between the first tooth 302 and the second tooth 304.

Figure 3 shows the oral care system 200, in which a controller 100 (not shown in detail here) is located inside the brush head of the oral care system 200. The embodiment of figure 3 shows a roll angle 104 (=rotation angle around the long axis of the toothbrush handle) used to determine the orientation between the brush heads of the oral care system 200 and the target tissue surface 300 in the oral cavity 400.

Figure 4 shows the oral care system 200 comprising the controller 100 (not shown in detail here), which is for example located inside the brush head, which is angled/tilted in relation to the target tissue surface 300, i.e. the surface of the tooth. This effective tilt or resultant brushing angle can be determined based on the measured pitch angle 106 (= rotation angle around the first short axis of the oral care device inducing a lifting or tilting motion of the brush head relative to the tooth surface). The pitch angle 106 is one example of the orientation data described herein.

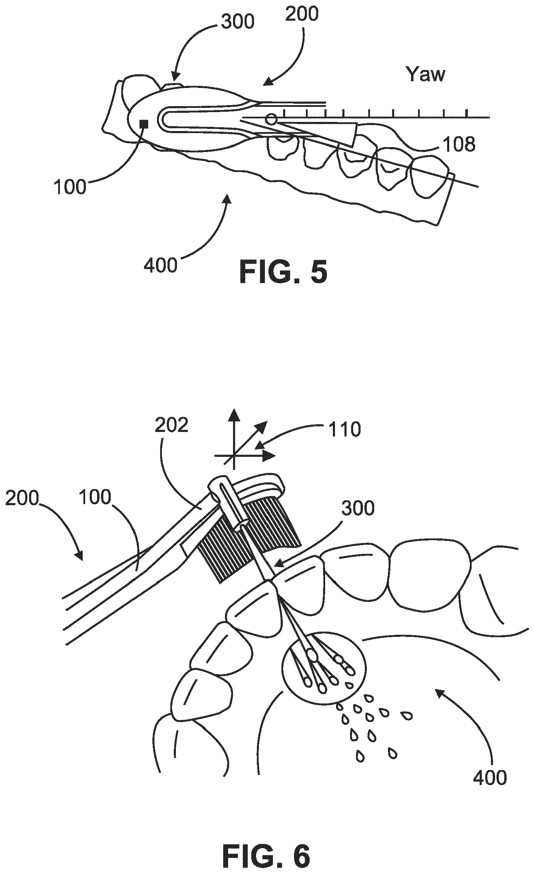

Figure 5 shows another perspective of the oral care system 200 comprising the controller 100 (not shown in detail) inside the brush head. It should be noted that typically the controller is in the handle. In this figure the brush head, as an exemplary embodiment of an element of the oral care system 200, is twisted on, along or towards the target tissue surface 300, which can be described with the yaw angle 108 (= rotation angle around the second short axis of the oral care device inducing an in-plane rotation or twisting motion of the brush head on the tooth surface).

Figure 6 shows an example of an element 202 of the oral care system 200 delivering fluid to the interdental space. In this embodiment the element is a combined brushing and flossing head 202. The oral care system 200 and/or the element 202 can generate the position data, which describes a relation of the relative position 110 of the oral care system 200 to the target tissue surface 300. The controller 100, which is located inside the combined brushing and flossing head 202 (or in any other element) and not shown in detail, can compare the measured position of the combined brushing and flossing head 202, exemplarily indicated by the 3D coordinate system 110, to the pre-defined position condition. In case the pre-defined position condition is met, the controller 100 generates a control signal thereby triggering the flossing function of the oral care system 200 and/or the element 202. In this embodiment the target tissue surface 300 is an interdental space. The oral care system 200 is capable of assessing the position of the interdental space. In case the position 110 of the oral care system and/or the element 202 meets the position of the interdental space, the flossing is activated by the control signal of the controller. Furthermore, when element 202 is moved by the user through the oral cavity or along the target tissue, and thereby the new position of the oral care system (200) does not meet the position of a new or subsequent interdental space anymore, a corresponding control signal can be generated by the controller to stop, i.e. deactivate, the flossing function of the combined brushing and flossing head 202 of the oral care system.

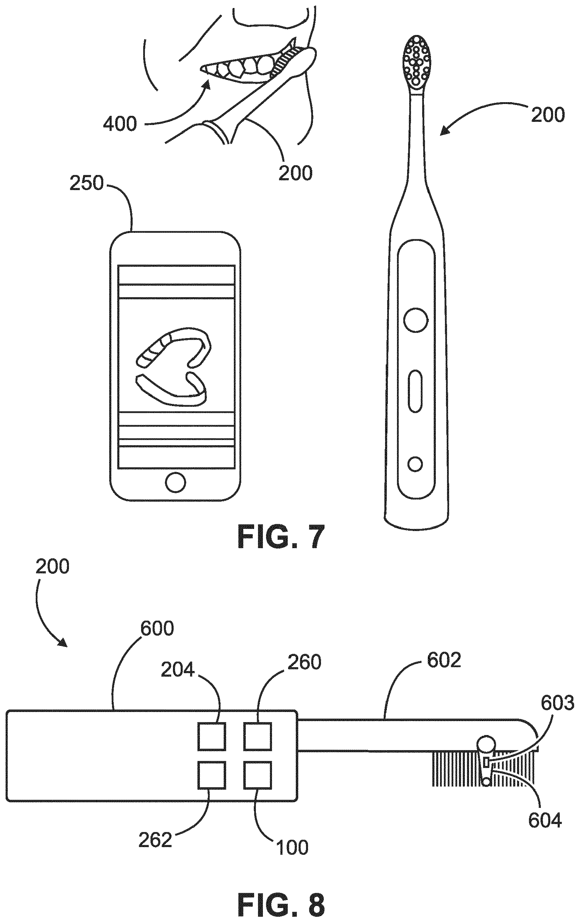

Figure 7 shows an oral care system 200 comprising as an element or component of the system, a handheld computing device 250, like e.g. a smartphone or tablet. The controller can be part of the handheld computing device 250. Furthermore, the handheld computing device 250 can be connected to the oral care system 200 wire-bound or wireless. In addition, the handheld computing device 250 can be configured for displaying to the user of the oral care system how to reach or meet the pre-defined orientation condition and/or the pre-defined position condition, thereby improving the cleaning results in the oral cavity 400.

In other words, the oral care system 200 comprises a controller, which is configured for generating a second control signal in case the orientation condition is not met, and the controller is configured for sending the second control signal to the oral care system 200 to output or display instructions to a user of the oral care system 200 in order to meet the orientation condition of the oral care system.

Figure 8 shows an embodiment of the oral care system 200. The oral care system 200 comprises a handle 600 and a flossing brush head 602 with integrated fluid emitting element 604 or a fluid emitting element 604 alone. The handle 600 comprises the controller 100 for generating the control signal as was described before in detail. The handle 600 of the oral care system comprises at least one actuator 204, which is embodied as a mechanical and/or fluid actuator. For example, the mechanical actuator can actuate the brush head and change orientation of the bristle field. Furthermore, the handle 600 comprises a sensor unit 260, which is configured for measuring the desired orientation and/or position data. Furthermore, the handle 600 comprises a fluid reservoir 262, which is fluidically connected with the nozzle of the head 602, and stores fluid for a fluid actuator. The flossing brush head 602 (which can also comprise an orientation and position sensor 603 at the fluid emitting element) is attached to the handle 602 of the oral care system 200.

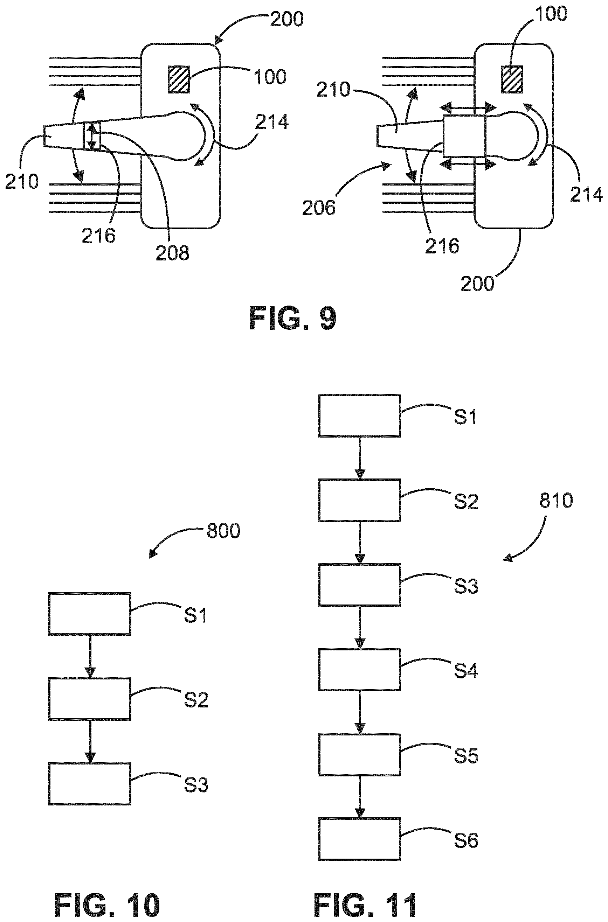

Figure 9 shows an embodiment of the oral care system 200 comprising a nozzle 210. The nozzle 210 can be adapted to change its angular rotation 214 or a geometry change such as aperture of the nozzle opening/diameter 208, e.g. using an actuator, 216, based on a control signal of the controller 100. The change of the diameter 208 can be performed in order to reduce the contact stresses on the gums in case the flossing jet stream hits gum, since the pressure of the flossing jet stream is less when the diameter is increased. Moreover, the diameter 208 of the nozzle 210 can be narrowed in order to increase the pressure of the flossing fluid when the nozzle 210 is directed to the target tissue surface 300, e.g. a very narrow interdental space. Moreover, the nozzle 210 of the oral care system 200 is comprises a bending actuator (216) configured for changing its orientation 206 relative to the brush or the target surface when a corresponding control signal of controller 100 is generated. The change of the nozzle geometry and/or orientation can be used to direct the nozzle 210 and cleaning fluid towards the target tissue surface 300. This can further improve the flossing procedure.

Figure 10 shows a flow diagram of steps illustrating the method for generating a control signal. Such a method can be performed by e.g. a controller 100 of an oral care system as was described before, but can also be carried out by e.g. a computer network structure as was also described before in more detail. The method comprises a step S1 for receiving orientation data and/or position data that was generated by an oral care system. The receipt of orientation data generated by the oral care system was explained in detail before. Furthermore, the method comprises the step of comparing the received orientation data and/or position data S2 with at least one pre-defined orientation condition and/or with at least one pre-defined position condition (or a combination of both). Moreover, the method comprises the step of generating the control signal S3 for the oral care system 200 when the received orientation data meets the pre-defined orientation condition and/or a predetermined position-specific orientation condition.

Figure 11 shows a further exemplary embodiment of the method the present invention. Regarding steps S 1 to S3 it is referred to Fig. 10 and its description. Moreover, the method comprises the step of triggering an activation and/or a deactivation S4 of a fluid delivery, e.g. a flossing operation, of the oral care system, like e.g. system 200 of figure 10. Furthermore, the method comprises the step of detecting a gum line, a gingival pocket and/or any other related feature of the oral cavity S5 in an image of the oral cavity 400. The method comprises the step of generating the control signal S6 for the oral care system when the received orientation data meets the pre-defined orientation condition and based on said detection of interdental space, occlusal tooth surface, the gum line, gingival pocket and/or any other related feature of the oral cavity.

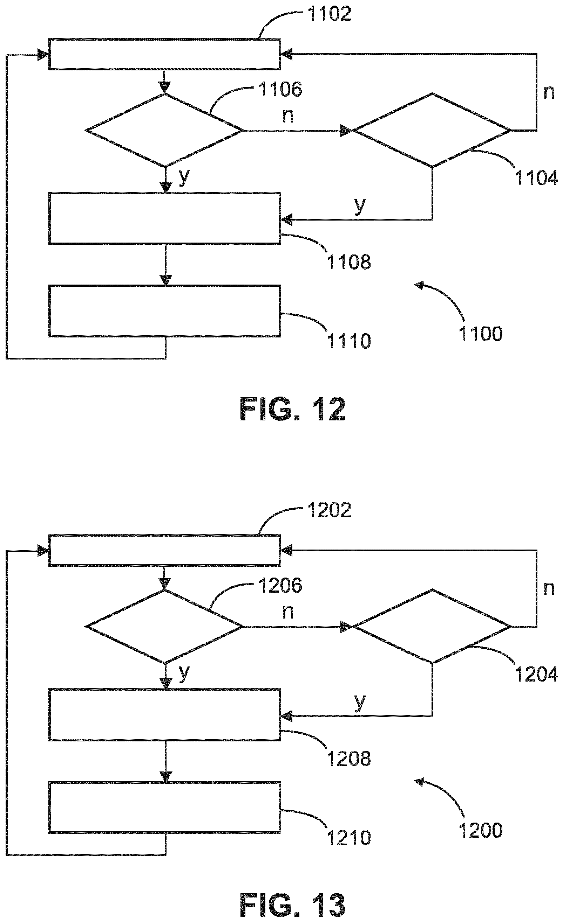

Figure 12 shows a diagram showing signal pathways for adaptation of the oral care system and an exemplary decision-making process 1100 for triggering the controller 100 to generate the control signal according to the present invention. The signal pathway 1100 may start with an inactive jetting mode 1102 of the oral care system. The controller determines whether the correct location specific angle is detected 1106. In case the correct angle or position specific angle is not detected the orientation of the oral care system should be optimized 1104, e.g. by entering an adaptation mode for adapting nozzle angle or geometry alone or in combination with position. The angle or orientation adjustment may also be performed by the user based on (optical, acoustic, visual) feedback / coaching received from the oral care system or a separate device such as a phone app (see also Fig. 13). However, in case the correct location specific angles are detected by the controller, the fluid jetting procedure of the oral care system can be started/activated, or an operation mode of the oral care system can be changed or at least operation parameter of the jetting procedure can be adjusted 1108. The jetting procedure performed by the oral care system can be stopped 1110 after a pre-determined time or a pre-defined number of jet pulses. Such a procedure can be realized with the controller, oral care system and method of the present invention.

Figure 13 shows a diagram showing another example of signal pathways for adaptation of the oral care system and the decision making process 1200 for teaching a user of the oral care system 200 to achieve better results. The signal pathway 1200 for teaching a user of the oral care system may begin with an inactive jetting procedure of the oral care system. The controller then determines whether the correct angle or position specific angle is detected 1206. In case the correct location specific angle is not detected the orientation of the oral care system should be optimized 1204 by alerting the user via e.g. a smartphone and/or teaching him how to adapt his holding position of the oral care system in order to meet the pre-defined orientation and/or position condition. In case the correct location specific angle is detected 1208 the flossing procedure can be adapted as described before. The flossing procedure can be ended, or the control signal is not generated anymore after a predetermined time or a pre-defined number of flossing pluses 1210. Such a procedure can be realized with the controller, oral care system and method of the present invention.

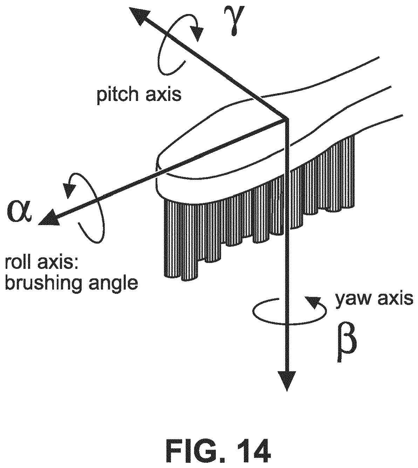

Figure 14 defines the roll, pitch and yaw angle as used herein. The roll angle describes the rotation angle around the long axis of the toothbrush handle or brush head, whereas the pitch and yaw angle describe rotations around axes that are perpendicular to the axis of the roll angle.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination. Where an indefinite or definite article is used when referring to a singular noun, e.g. "a", "an" or "the", this includes a plurality of that noun unless something else is specifically stated. It is to be understood that terms used are interchangeable and under appropriate circumstances and that the embodiments of the invention described herein are capable of operation in other sequences than described or illustrated herein.

### LIST OF REFERENCE SIGNS:

100 - controller
102 - angle
104 - roll angle
106 - pitch angle
108 - yaw angle
110 - 3D coordinate system indicating a position
200 - oral care system
202 - element/component of the oral care system
204 - actuator
206 - orientation
208 - diameter
210 - nozzle
212 - element/component of the oral care system
214 - (bending) actuator of fluid emitting element
216 - angulation/rotation of fluid emitting element
250 - handheld computing device
260 - sensor unit
262 -fluid reservoir
300 - target tissue surface
302 - first tooth
304 - second tooth
400 - oral cavity
600 - handle
602 - brush and/or flushing head
603 - fluid emitting element
604 - sensor in fluid emitting element
1100 - signal pathway and decision-making process for triggering a controller to generate a control signal
1102 - inactive jetting mode
1104 - optimization of angle orientation
1106 - detection of correct location specific angles
1108 - adaption flossing procedure
1110 - stopping flossing procedure
1200 - decision making process for teaching a user
1202 - inactive jetting mode
1204 - teaching a user to change orientation
1206 - detection of correct location specific angles
1208 - adaption flossing procedure
1210 - stopping flossing procedure
S1 - receiving orientation data and/or position data
S2 - comparing the received orientation data and/or position data
S3 - generating the control signal
S4 - triggering an activation and/or a deactivation
S5 - detecting a gum line, a gingival pocket and/or any other related feature of the oral cavity
S6 - generating the control signal

## Claims

1. A controller (100) for generating a control signal for an oral care system (200),
wherein the controller (100) is configured for receiving orientation data generated by the oral care system (200),
wherein the orientation data describes at least one angle (102) between the oral care system (200) and a target surface (300) in an oral cavity (400) or an angle relative to a reference vector,
wherein the controller (100) is configured for comparing the received orientation data with at least one pre-defined orientation condition,
wherein the controller (100) is configured for triggering an adaption of an orientation (206) of a fluid emitting element (210) of the oral care system (200) in dependence on the comparison, and generating a fluid delivery control signal for the oral care system (200) if the received orientation data fulfills the pre-defined orientation condition, wherein the fluid delivery control signal is configured to trigger or adapt an oral care procedure performed by the oral care system and for triggering an activation or a deactivation of a fluid delivery, e.g. a flossing operation, of the oral care system (200).

2. The controller according to claim 1,
wherein the at least one angle (102) of the orientation data is a roll angle (104), a pitch angle (106), a yaw angle (108) and/or a combination of at least two of said angles between at least one element (202) of the oral care system (200) and the target surface (300) in the oral cavity (400) or of the at least one element (202) of the oral care system (200) relative to a reference vector.

3. The controller according to any of the preceding claims,
wherein the controller (100) is configured for triggering an adaption of at least one operation parameter of at least one actuator (204) of the oral care system (200) selected from the group consisting of a fluid actuator, a mechanical actuator, an electric actuator, a magnetic actuator, an electromagnetic actuator, a triboelectric actuator, and an ultrasonic actuator.

4. The controller according to any of the preceding claims,
wherein the controller (100) is configured for triggering a geometry change (28) of a fluid emitting element (210) of the oral care system (200), or a selective activation of a single nozzle from a plurality of fixed nozzles.

5. The controller according to any of the preceding claims,
wherein in case the orientation condition is not fulfilled, the controller (100) is configured for sending an instruction control signal to the oral care system (200) for outputting instructions to a user of the oral care system (200) in order to meet the orientation condition of the oral care system (200).

6. The controller according to any of the preceding claims,
wherein the controller (100) is configured for receiving position data describing a position (110) of an element (210) of the oral care system (200),
wherein the controller (100) is configured for comparing the received position data with at least one pre-defined position condition, and
wherein the controller (100) is configured for generating the fluid delivery control signal for the oral care system (200) if the received position data meets the pre-defined position condition.

7. The controller according to claim 6,
wherein the controller (100) is configured for detecting an occlusal surface, an interdental space, a gum line, a gingival pocket and/or a tooth quadrant based on the received position data, and
wherein the controller (100) is configured for generating the fluid delivery control signal based on said detection.

8. The controller according to any of the claims 6 to 7,
wherein the controller (100) is configured for comparing the received orientation data and the received position data with a pre-defined position-specific orientation condition or an orientation-specific position, and
wherein the controller (100) is configured for generating the fluid delivery control signal if the position data and the orientation data meet the pre-defined position-specific orientation condition or the orientation-specific position.

9. An element (600) for an oral care system (200), the element comprising:
- a controller (100) according to any of the claims 1 to 8,
wherein the element (600) is embodied as a handle, a brush head, a flossing head, and/or a mouthpiece or part of the latter.

10. An oral care system (700) comprising:
- an element (600) according to claim 9, and
- a sensor unit (702) for measuring the orientation data, and preferably a sensor for measuring the position data.

11. A computer program, which when executed instructs the controller as claimed in any of the claims 6 to 8 to perform the steps of:
receiving orientation data and position data (S1) generated by an oral care system (200), wherein the orientation data describes at least one angle (102) between the oral care system (200) and a target tissue surface (300) in an oral cavity (400) or an angle relative to a reference vector, for instance the gravity vector,
comparing the received orientation data and position data (S2) with at least one predefined orientation condition and/or with at least one pre-defined position condition, and
generating a fluid delivery control signal (S3) for the oral care system (200) if the received orientation data fulfills the pre-defined orientation condition and a pre-defined position-specific orientation condition, wherein an orientation (206) of a fluid emitting element (210) of the oral care system (200) is adapted in dependence on the comparison, and the fluid delivery control signal is configured to trigger or adapt an oral care procedure performed by the oral care system and for triggering an activation and/or a deactivation (S4) of a fluid delivery, e.g. a flossing operation, of the oral care system (200).

12. The computer program according to claim 11, further comprising instructions to perform the steps of:
detecting an occlusal surface, a gum line, a gingival pocket and/or any other related feature of the oral cavity (S5) in an image of the oral cavity (400), and
generating the fluid delivery control signal (S6) for the oral care system (200) if the received orientation data meets the pre-defined orientation condition and based on said detection of the gum line, gingival pocket and/or any other related feature of the oral cavity.

## Patentansprüche

1. Steuerung (100) zum Erzeugen eines Steuersignals für ein Mundpflegesystem (200), wobei die Steuerung (100) konfiguriert ist, um Ausrichtungsdaten zu empfangen, die von dem Mundpflegesystem (200) erzeugt werden, wobei die Ausrichtungsdaten mindestens einen Winkel (102) zwischen dem Mundpflegesystem (200) und einer Zielfläche (300) in einer Mundhöhle (400) oder einen Winkel in Bezug auf einen Referenzvektor beschreiben, wobei die Steuerung (100) konfiguriert ist, um die empfangenen Ausrichtungsdaten mit mindestens einer vordefinierten Ausrichtungsbedingung zu vergleichen, wobei die Steuerung (100) konfiguriert ist, um eine Anpassung einer Ausrichtung (206) eines fluidemittierenden Elements (210) des Mundpflegesystems (200) abhängig von dem Vergleich auszulösen und ein Fluidzufuhrsteuersignal für das Mundpflegesystem (200) zu erzeugen, wenn die empfangenen Ausrichtungsdaten die vordefinierte Ausrichtungsbedingung erfüllen, wobei das Fluidzufuhrsteuersignal konfiguriert ist, um einen von dem Mundpflegesystem durchgeführten Mundpflegevorgang auszulösen oder anzupassen und eine Aktivierung oder Deaktivierung einer Fluidzufuhr, z.B. eines Floss-Vorgangs, des Mundpflegesystems (200) auszulösen.

2. Steuerung nach Anspruch 1, wobei der mindestens eine Winkel (102) der Ausrichtungsdaten ein Rollwinkel (104), ein Nickwinkel (106), ein Gierwinkel (108) und/oder eine Kombination von mindestens zwei der genannten Winkel zwischen mindestens einem Element (202) des Mundpflegesystems (200) und der Zielfläche (300) in der Mundhöhle (400) oder des mindestens einen Elements (202) des Mundpflegesystems (200) in Bezug auf einen Referenzvektor ist.

3. Steuerung nach einem der vorhergehenden Ansprüche, wobei der Steuerung (100) zum Auslösen einer Anpassung mindestens eines Betriebsparameters mindestens eines Aktuators (204) des Mundpflegesystems (200) konfiguriert ist, der ausgewählt ist aus der Gruppe, bestehend aus einem Fluidaktuator, einem mechanischen Aktuator, einem elektrischen Aktuator, einem magnetischen Aktuator, einem elektromagnetischen Aktuator, einem triboelektrischen Aktuator und einem Ultraschallaktuator.

4. Steuerung nach einem der vorhergehenden Ansprüche, wobei die Steuerung (100) zum Auslösen einer Geometrieänderung (28) eines fluidemittierenden Elements (210) des Mundpflegesystems (200) oder einer selektiven Aktivierung einer einzelnen Düse aus einer Vielzahl von feststehenden Düsen konfiguriert ist.

5. Steuerung nach einem der vorhergehenden Ansprüche, wobei für den Fall, dass die Ausrichtungsbedingung nicht erfüllt ist, die Steuerung (100) konfiguriert ist, um ein Befehlssteuersignal an das Mundpflegesystem (200) zu senden, um Befehle an einen Benutzer des Mundpflegesystems (200) auszugeben, um die Ausrichtungsbedingung des Mundpflegesystems (200) zu erfüllen.

6. Steuerung nach einem der vorhergehenden Ansprüche, wobei die Steuerung (100) zum Empfangen von Positionsdaten konfiguriert ist, die eine Position (110) eines Elements (210) des Mundpflegesystems (200) beschreiben, wobei die Steuerung (100) konfiguriert ist, um die empfangenen Positionsdaten mit mindestens einer vordefinierten Positionsbedingung zu vergleichen, und wobei die Steuerung (100) konfiguriert ist, um das Fluidzufuhrsteuersignal für das Mundpflegesystem (200) zu erzeugen, wenn die empfangenen Positionsdaten die vordefinierte Positionsbedingung erfüllen.

7. Steuerung nach Anspruch 6, wobei die Steuerung (100) konfiguriert ist, um eine Okklusionsfläche, einen Interdentalraum, eine Zahnfleischlinie, eine Zahnfleischtasche und/oder einen Zahnquadranten basierend auf den empfangenen Positionsdaten zu erfassen, und wobei die Steuerung (100) konfiguriert ist, um das Fluidzufuhrsteuersignal basierend auf der genannten Erfassung zu erzeugen.

8. Steuerung nach einem der Ansprüche 6 bis 7, wobei die Steuerung (100) konfiguriert ist, um die empfangenen Ausrichtungsdaten und die empfangenen Positionsdaten mit einer vordefinierten positionsspezifischen Ausrichtungsbedingung oder einer ausrichtungsspezifischen Position zu vergleichen, und wobei die Steuerung (100) konfiguriert ist, um das Fluidzufuhrsteuersignal zu erzeugen, wenn die Positionsdaten und die Ausrichtungsdaten die vordefinierte positionsspezifische Ausrichtungsbedingung oder die ausrichtungsspezifische Position erfüllen.

9. Element (600) für ein Mundpflegesystem (200), das Element umfassend:
- eine Steuerung (100) nach einem der Ansprüche 1 bis 8, wobei das Element (600) als ein Griff, ein Bürstenkopf, ein Zahnseidenkopf und/oder ein Mundstück oder ein Teil des letzteren verkörpert ist.

10. Mundpflegesystem (700), umfassend:
• ein Element (600) nach Anspruch 9, und
• eine Sensoreinheit (702) zum Messen der Ausrichtungsdaten und vorzugsweise einen Sensor zum Messen der Positionsdaten.

11. Computerprogramm, das, wenn es ausgeführt wird, die Steuerung nach einem der Ansprüche 6 bis 8 anweist, die folgenden Schritte auszuführen: empfangen von Ausrichtungsdaten und Positionsdaten (S1), die von einem Mundpflegesystem (200) erzeugt werden, wobei die Ausrichtungsdaten mindestens einen Winkel (102) zwischen dem Mundpflegesystem (200) und einer Zielgewebeoberfläche (300) in einer Mundhöhle (400) oder einen Winkel in Bezug auf einen Referenzvektor, zum Beispiel den Schwerkraftvektor, beschreiben, vergleichen der empfangenen Ausrichtungsdaten und Positionsdaten (S2) mit mindestens einer vordefinierten Ausrichtungsbedingung und/oder mit mindestens einer vordefinierten Positionsbedingung, und Erzeugen eines Fluidzufuhrsteuersignals (S3) für das Mundpflegesystem (200), wenn die empfangenen Ausrichtungsdaten die vordefinierte Ausrichtungsbedingung und eine vordefinierte positionsspezifische Ausrichtungsbedingung erfüllen, wobei eine Ausrichtung (206) eines fluidemittierenden Elements (210) des Mundpflegesystems (200) abhängig von dem Vergleich angepasst wird und das Fluidzufuhrsteuersignal zum Auslösen oder Anpassen eines von dem Mundpflegesystem durchgeführten Mundpflegevorgangs und zum Auslösen einer Aktivierung und/oder Deaktivierung (S4) einer Fluidzufuhr, z.B. eines Floss-Vorgangs, des Mundpflegesystems (200) konfiguriert ist.

12. Computerprogramm nach Anspruch 11, ferner umfassend Anweisungen zum Ausführen der folgenden Schritte: erfassen einer Okklusionsfläche, eines Zahnfleischsaums, einer Zahnfleischtasche und/oder eines anderen verwandten Merkmals der Mundhöhle (S5) in einem Bild der Mundhöhle (400), und erzeugen des Fluidzufuhrsteuersignals (S6) für das Mundpflegesystem (200), wenn die empfangenen Ausrichtungsdaten die vordefinierte Ausrichtungsbedingung erfüllen und basierend auf der Erkennung des Zahnfleischsaums, der Zahnfleischtasche und/oder eines anderen verwandten Merkmals der Mundhöhle.

## Revendications

1. Un contrôleur (100) pour générer un signal de commande pour un système de soins bucco-dentaires (200), le contrôleur (100) est configuré pour recevoir les données d'orientation générées par le système de soins bucco-dentaires (200), les données d'orientation décrivent au moins un angle (102) entre le système d'hygiène bucco-dentaire (200) et une surface cible (300) dans une cavité buccale (400) ou un angle par rapport à un vecteur de référence, le contrôleur (100) est configuré pour comparer les données d'orientation reçues avec au moins une condition d'orientation prédéfinie, le contrôleur (100) est configuré pour déclencher une adaptation de l'orientation (206) d'un élément émetteur de fluide (210) du système de soins bucco-dentaires (200) en fonction de la comparaison, et pour générer un signal de commande d'administration de fluide pour le système de soins bucco-dentaires (200) si les données d'orientation reçues remplissent la condition d'orientation prédéfinie, le signal de commande d'administration de fluide étant configuré pour déclencher ou adapter une procédure de soins bucco-dentaires effectuée par le système de soins bucco-dentaires et pour déclencher une activation ou une désactivation d'une administration de fluide, par exemple une opération de fil dentaire, du système de soins bucco-dentaires (200).

2. Le contrôleur selon la revendication 1, dans lequel au moins un angle (102) des données d'orientation est un angle de roulis (104), un angle de tangage (106), un angle de lacet (108) et/ou une combinaison d'au moins deux de ces angles entre au moins un élément (202) du système de soins bucco-dentaires (200) et la surface cible (300) dans la cavité buccale (400) ou d'au moins un élément (202) du système de soins bucco-dentaires (200) par rapport à un vecteur de référence.

3. Le contrôleur selon l'une des revendications précédentes, dans lequel le contrôleur (100) est configuré pour déclencher une adaptation d'au moins un paramètre de fonctionnement d'au moins un actionneur (204) du système de soins bucco-dentaires (200) choisi dans le groupe constitué d'un actionneur de fluide, d'un actionneur mécanique, d'un actionneur électrique, d'un actionneur magnétique, d'un actionneur électromagnétique, d'un actionneur triboélectrique et d'un actionneur ultrasonique.

4. Le contrôleur selon l'une des revendications précédentes, dans lequel le contrôleur (100) est configuré pour déclencher un changement de géométrie (28) d'un élément émetteur de fluide (210) du système de soins bucco-dentaires (200), ou une activation sélective d'une seule buse à partir d'une pluralité de buses fixes.

5. Le contrôleur selon l'une des revendications précédentes, dans lequel, si la condition d'orientation n'est pas remplie, le contrôleur (100) est configuré pour envoyer un signal de commande d'instruction au système d'hygiène bucco-dentaire (200) afin de fournir des instructions à un utilisateur du système d'hygiène bucco-dentaire (200) pour satisfaire à la condition d'orientation du système d'hygiène bucco-dentaire (200).

6. Le contrôleur selon l'une des revendications précédentes, le contrôleur (100) est configuré pour recevoir des données de position décrivant une position (110) d'un élément (210) du système de soins bucco-dentaires (200), dans lequel le contrôleur (100) est configuré pour comparer les données de position reçues avec au moins une condition de position prédéfinie, et dans lequel le contrôleur (100) est configuré pour générer le signal de commande de distribution de fluide pour le système d'hygiène bucco-dentaire (200) si les données de position reçues satisfont à la condition de position prédéfinie.

7. Le contrôleur selon la revendication 6, dans lequel le contrôleur (100) est configuré pour détecter une surface occlusale, un espace interdentaire, une ligne gingivale, une poche gingivale et/ou un quadrant dentaire sur la base des données de position reçues, et le contrôleur (100) est configuré pour générer le signal de commande de distribution de fluide sur la base de cette détection.

8. Le contrôleur selon l'une des revendications 6 à 7, le contrôleur (100) est configuré pour comparer les données d'orientation reçues et les données de position reçues avec une condition d'orientation spécifique à une position prédéfinie ou une position spécifique à une orientation, et le contrôleur (100) est configuré pour générer le signal de commande de distribution de fluide si les données de position et les données d'orientation répondent à la condition prédéfinie d'orientation spécifique à la position ou à la position spécifique à l'orientation.

9. Un élément (600) pour un système de soins bucco-dentaires (200), l'élément comprenant:
• un contrôleur (100) selon l'une des revendications 1 à 8, dans lequel l'élément (600) se présente sous la forme d'une poignée, d'une tête de brosse, d'une tête de fil dentaire et/ou d'un embout buccal ou d'une partie de ce dernier.

10. Un système de soins bucco-dentaires (700) comprenant
• un élément (600) selon la revendication 9, et
• un capteur (702) pour mesurer les données d'orientation et, de préférence, un capteur pour mesurer les données de position.

11. Un programme d'ordinateur qui, lorsqu'il est exécuté, donne des instructions au contrôleur selon la revendication de l'un quelconque des éléments suivants les revendications 6 à 8 pour effectuer les étapes suivantes: recevoir des données d'orientation et de position (S1) générées par un système d'hygiène bucco-dentaire (200), les données d'orientation décrivant au moins un angle (102) entre le système d'hygiène bucco-dentaire (200) et une surface tissulaire cible (300) dans une cavité buccale (400) ou un angle par rapport à un vecteur de référence, par exemple le vecteur de gravité, comparer les données d'orientation reçues et les données de position (S2) avec au moins une donnée de prépositionnement dans lequel les données d'orientation reçues sont comparées à une condition d'orientation définie et/ou à au moins une condition de position prédéfinie, et génèrent un signal de commande de distribution de fluide (S3) pour le système de soins bucco-dentaires (200) si les données d'orientation reçues satisfont à la condition d'orientation prédéfinie et à une condition d'orientation spécifique à la position prédéfinie, dans lequel une orientation (206) d'un élément émetteur de fluide (210) du système de soins bucco-dentaires (200) est adaptée en fonction de la comparaison, et le signal de commande d'administration de fluide est configuré pour déclencher ou adapter une procédure de soins bucco-dentaires exécutée par le système de soins bucco-dentaires et pour déclencher une activation et/ou une désactivation (S4) d'une administration de fluide, par exemple, un passage de fil dentaire, du système d'hygiène bucco-dentaire (200) .

12. Le programme informatique selon la revendication 11, comprenant en outre des instructions pour effectuer les étapes suivantes: la détection d'une surface occlusale, d'une ligne gingivale, d'une poche gingivale et/ou de toute autre caractéristique de la cavité buccale (S5) dans une image de la cavité buccale (400), et générer le signal de commande de distribution de fluide (S6) pour le système d'hygiène bucco-dentaire (200) si les données d'orientation reçues satisfont à la condition d'orientation prédéfinie et sur la base de ladite détection de la ligne gingivale, de la poche gingivale et/ou de toute autre caractéristique connexe de la cavité buccale.
